Europäisches Patentamt

(19) European Patent Office

Office européen des brevets

(11) Publication number: **0 074 224**

A1

## (12) EUROPEAN PATENT APPLICATION

(21) Application number: 82304519.0

(22) Date of filing: 26.08.82

(51) Int. Cl.³: **B 23 K 33/00**
E 04 B 1/38, A 45 F 1/16

(30) Priority: 28.08.81 AU 492/81

(43) Date of publication of application:
16.03.83 Bulletin 83/11

(84) Designated Contracting States:
CH DE FR GB IT LI

(71) Applicant: A.D. SPRING MFG. PTY. LTD.
154 Bellevue Parade
Charlton New South Wales 2218(AU)

(72) Inventor: Spring, Roger Allan
154 Bellevue Parade
Carlton New South Wales 2218(AU)

(74) Representative: Tomlinson, Kerry John et al,
Frank B. Dehn & Co. European Patent Attorneys Imperial
House 15-19 Kingsway
London WC2B 6UZ(GB)

(54) Tube junctions, tube couplings and structures made therefrom.

(57) The invention concerns tubular structures, tube junctions for such structures and tube couplings which incorporate the tube junctions. The invention is useful for example for ladders, towers, horticultural buildings and fences. The junction comprises two tubes, one tube (2) having an upset end of reduced cross-section which end terminates in an inwardly turned end edge which defines a partly closed end aperture; the upset end is fixed to the sidewall of the other tube (24). A coupling containing one or more stub tubes each joined to an adjacent tube by the joint described is also disclosed. The couplings engage structural tubes in order to build up a frame, for example, a roof truss. A method of manufacture is disclosed involving welding or brazing in a rotatable jig.

FIG. 5

EP 0 074 224 A1

Tube junctions, tube couplings and structures made

therefrom

This invention concerns tubular structures of the type which are composed of tubes and tube couplings and especially the couplings used in such structures.

One form of scaffolding which is made of steel pipes relies upon the use of hinged steel clamps which are tightened about the pipes with nuts and bolts. Fences which include netting are usually built up from galvanised steel pipes using paired couplings. Such couplings consist of two halves, each half being profiled to mate with two pipes disposed at $90^{\circ}$ to one another and have a hump or ridge at one or both ends and a raised pad with a circular aperture which receives a clamping bolt. The bolt passes through both halves of the coupling but not through the pipe. Hence the couplings are secured by side pressure. These can rotate if the bolt slackens or slips. The ridges, pads and nuts and bolts are necessary for the rigidity of the tubular structure but in some constructional applications the obtrusive appearance is not acceptable.

In another method the end of a 25 mm diameter tube is flattened in a press for a distance of 12 mm such that the flat parallel faces of the tube are separated by 10 mm. The flattened end is then butted to the sidewall of a second 25 mm diameter tube and arc-welded thereto by two short welds (and along the junction of the flats with the round tube). The proximity of the paired welds results in a joint poorly adapted to resist loads applied transversely of the flats. The raw edge of the tube does not provide a suitable boundary for the welds which follow.

Another more uncommon method is to prepare one tube for a perfect mating butt with the other by grinding the butting end to a matching profile, but this step is time-consuming if only a tube coupling is the required result.

The objective of this invention is to provide a coupling in which these disadvantages are minimised.

According to an apparatus aspect of this invention there is provided a tube junction comprising two tubes, one tube having an upset end with a portion of reduced cross-section which portion terminates in an inwardly turned end edge which defines a partially closed end aperture; the upset end being fixed to the side wall of the other tube. This junction is useful in the construction of ladders, fences, trolleys, towers and the like. The junction may also take the form of a tube coupling comprising two stub tubes each being capable of engaging a structural tube for building a structure, one stub tube having a tube-engaging free end and an opposite, upset end with a portion of reduced cross-section which portion terminates in an inwardly turned end edge which defines a partially closed end aperture; the upset end being fixed to the sidewall of the other stub tube.

The cross-sectional area of the partially closed end aperture may be 30 - 70 per cent, preferably 40 - 50 per cent, of the stub tube cross-sectional area. By the latter is meant the area of the circle or square defined by the largest outer perimeter of the tube.

The reduction in cross-sectional area is therefore such as will prepare the joint for the addition of joining material, for example, fillet welding. We prefer to close one end of the tubes somewhat by either doming or coning. This is easily performed by a cold swaging operation. Square section tube needs somewhat less doming than round section tube. If friction welding is the joining technique the tube may be prepared by either necking and doming or simply doming. We prefer to leave the corrugations around the mouth of the domed tube which result from swaging as this assists the welding step which follows. If pipe ends are carefully prepared round tubes may be joined to square tubes and vice versa.

While small and medium size tubes need reducing by the percentages defined above, the quantity of reduction is influenced by the need to have two zones of contact separated by a sufficient distance as will maximize the joint stiffness when the weld, braze or adhesive material is added yet not such a large distance as will result in a shallow groove between the tubes, as this leads to longer joining times, greater mass of joining material and in heat processes, more joint distortion. Those skilled in the art will appreciate the compromise which is necessary and the manner in which this is calculated.

Such doming or coning may cause the inwardly turned end edge to lie normal to the adjacent region of the domed or coned wall of the stub tube.

The tubes may be joined together by application of adhesive or by brazing, but we prefer welding. Arc welding is preferred because the zone in which the pipes butt together is a ring-like groove and is well suited to receive a fillet weld. Friction welding and spot welding are also feasible.

When making couplings the upset end of one stub tube may be connected to the sidewall of the other tube by two mutually opposite brazes or fillet welds laid between the contiguous zones of the tubes, the brazes or welds being disposed in positions which maximise the stiffness of the coupling with respect to the direction of the load expected in the structure of which the coupling ultimately forms a part.

The weld need not extend for $360^{\circ}$ around the joint such as might occur with friction welding. The length of the brazes or welds, together may equal 25 - 100 per cent of the perimeter of the upset end of the tube. We have found in arc welding the joint that two mutually opposite arcuate welds of about $45^{\circ}$ each stabilise the joint sufficiently for construction of the type which is suited to tubular frame layout, that is, greenhouses, shade houses, aviaries, climbing frames, playground toys, furniture, shelving, handrails, fences, towers, ladders, trolleys, barrows, pallets, gates and the like. Scaffolding requires 100 per cent perimeter welding. Steel frame buildings or parts thereof such as roof trusses are also possible if the appropriate pipe sections are used, for example, rectangular sections. The tube-engaging free end of the stub tube may be modified to afford a neat, coaxially overlapping union with a structural tube. The end may be necked such that the leading section of the tube is a sliding fit into the structural tube and the following section is a push fit in the structural tube.

The stub tubes need only be long enough to serve as sockets for the main tubes of the structure, but could be longer and braced by struts. In order to receive these the free ends of the tubes of the coupling may be necked or flared. The main tubes may be secured to the couplings by a rivet or screw or adhesive if required.

Tubes of ordinary commercial cross-section, that is, circular, rectangular and oval may be used for this constructional method. Dissimilar tube sizes and cross-sections may be successfully joined, providing the ends are swaged sufficiently as described above.

The method aspect of the invention provides a method of joining two tubes to make a tube junction as defined above, comprising: reducing the cross-section of one end of one of the tubes thereby directing the end edge of the tube inwardly in order to increase its strength; butting the end with the reduced cross-section to the curved side wall of the other tube and fixing the end to the side wall. The reduction in cross-section of the end of the tube may be performed by partially closing the end of a circular tube to give the end a domed appearance. Reductions in cross-sectional area may be 30, 35, 40, 45, 50, 55, 60, 65 or 70 per cent. The welds or brazes which provide the fixing may extend around 25, 30, 35, 40, 45, 50, 55, 60, 65, 70, 75, 80, 85, 90, 95 or 100 per cent of the junction perimeter.

Various exemplary embodiments of the invention are now described with reference to the drawings in which:

Fig.1 is a section of a stub tube of a coupling already prepared by both reduction of its cross-section and necked to receive a structural tube;

Fig.2 is an end view of the tube of Fig.1 from direction A;

Fig.3 is a side view of a stub tube subjected to coning;

Fig.4 is a side view of a T-coupling;

Fig.5 is a plan of a T-coupling;

Fig.6 shows a four-way coupling showing the angular joint at 20°.

Fig.7 is a plan view of the stub tube 24 from Fig.5 in a welding jig; and

Fig.8 is a perspective view of a fragment of a domed stub tube of square cross-section.

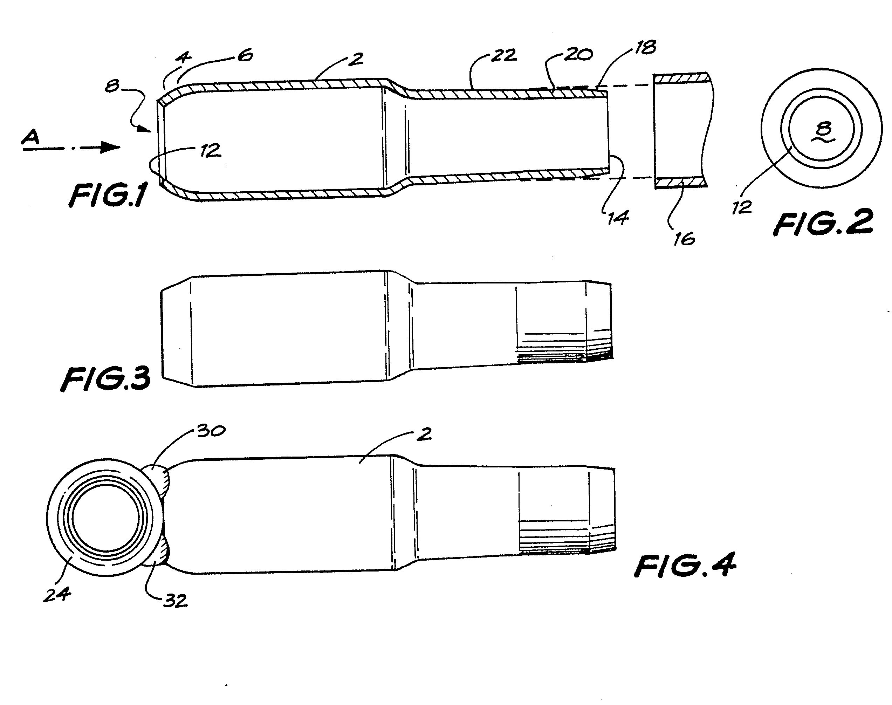

Referring now to Figs.1 and 2, a 25 mm o.d. steel tube 2, 110 mm long is domed at one end 4 in a cold swaging operation in order to reduce its diameter to 15 mm. The doming is only applied to the endmost 5 mm margin 6, resulting in a radius of about that distance. The end aperture 8 of the tube is thus partially closed and the radiussed margin 6 suffers smooth deformation as shown. The end edge 12 is directed inwards and lies normal to the margin 6 surrounding the aperture. It is not necessary to turn the edge 12 to lie normal to the long axis of the tube or to round it or otherwise modify its raw state. The opposite end of the tube is next swaged to provide a necked portion 14 for coaxial overlapping union with a 25 mm o.d. structural tube 16. The necked portion has a bevelled mouth 18, a leading section 20 which is a sliding fit in tube 16 and a following section 22 which is a push fit in tube 16.

This locks the joint.

Fig.3 shows a tube similar to that of Fig.1 except that the end has been formed into a conical shape.

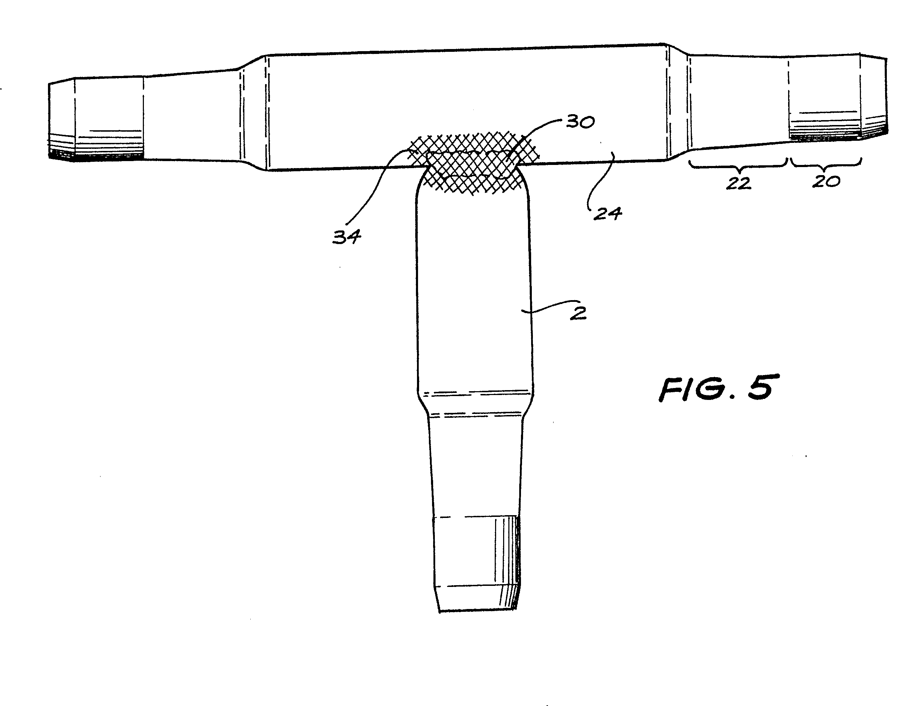

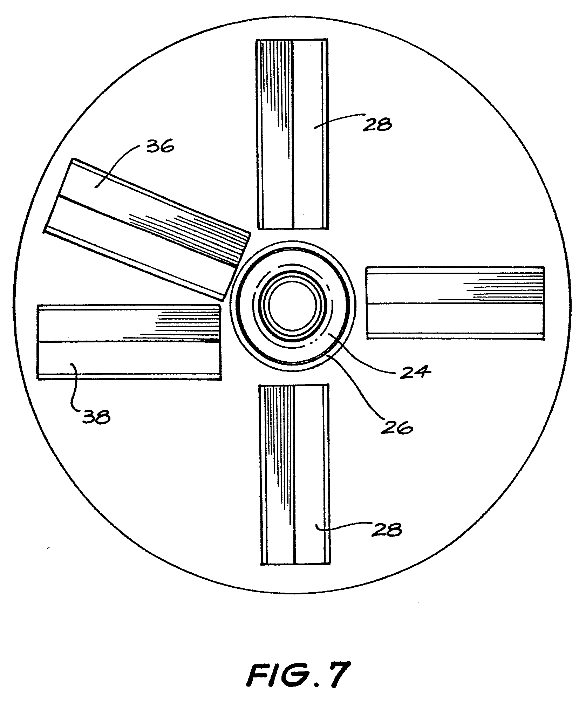

Referring now to Fig. 5 in order to explain the method of manufacture of a coupling, another stub tube (24) 245 mm long and of 25 mm o.d. is necked at both ends for the purpose of making a T-piece. Next the tube 24 of Fig.5 is loaded to the central vertical tube holder 26 in a jig shown in Fig.7 and tube 2 of Fig.1 is laid across V-blocks 28 and clamped prior to welding. A fillet weld 20 mm long 30 is laid between the margin 12 and the side wall of the tube as shown in Figs.4 and 5. The jig is rotated and a corresponding weld 32 is laid on the opposite side of tube 2. A zinc-rich coating 34 is applied cold to the weld surface and the coupling is ready for use. We prefer to use steel tube coated inside and outside with zinc, obtainable under the Trade Mark GALVABOND, the purpose of the post-weld coating being to replace the original coating disturbed by the arc.

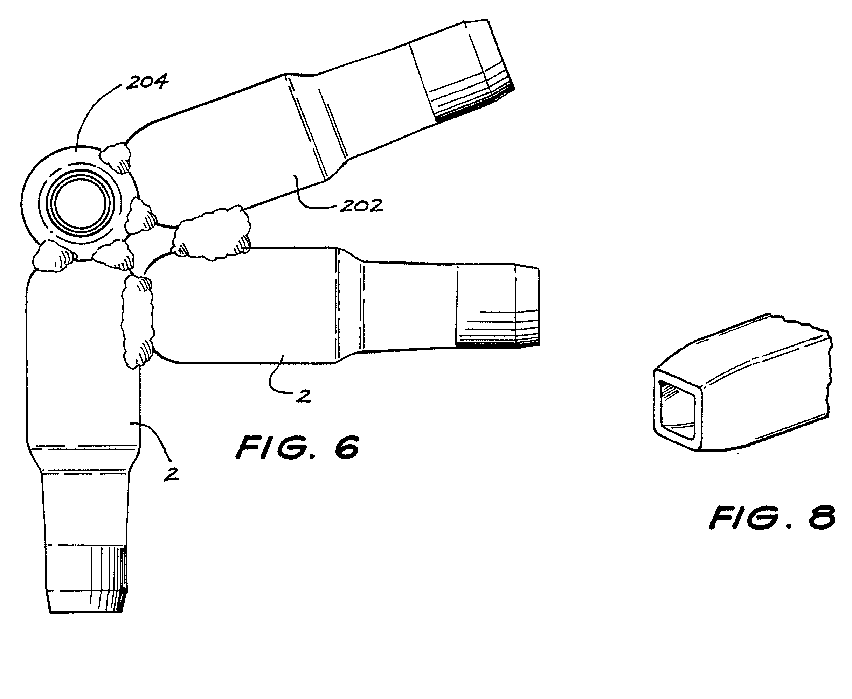

The jig has a V-block 36 situated at $20^{O}$ to adjacent V-block 38. Further V-blocks are situated mutually at $90^{O}$. The pair of blocks 36, 38 are used to manufacture the corner coupling shown in Fig.6. Such a coupling may form the corner of a greenhouse, the stub tube 202 connecting via a rafter tube with a ridge tube lying parallel to tube 204.

In larger frames, a roof truss is prefabricated and is mounted on a roofless building made from either a box-like tube frame or a conventional timber frame, but it is possible to design couplings for all the structures which are presently built by established methods. Especially useful is a spider coupling made of radiating stub tubes welded to adjacent radiating tubes in the end margin area, all of the tubes being inclined at the same angle. This coupling can form the centre of a circular inclined roof for use in a gazebo, shade house or greenhouse.

In another embodiment the tube is almost completely closed by the swaging process because for some applications it is better to shut out weld sputter.

Fig.8 shows the upset end of a stub tube of square cross-section. The four corners at the upset end are rounded and the endmost part of each of the four walls is inclined inwards defining a square aperture of less cross-sectional area than the full cross-sectional area of the tube.

We have found the advantages of the coupling and the method of building construction rendered possible by the use of the coupling to be:

1.    More acceptable appearance;

2.    More convenient cladding procedures are possible;

3.    Stronger structures are possible using the same tubular material of the prior art modes herein described;

4.    The weld projections lie below the surfaces of the surrounding tubes, avoiding the need to remove surplus weld material;

5.    The couplings permit several tubes in a coupling to have corresponding intersecting axes in a common plane. This affords versatile design possibilities;

6.    The building or frame which is the product of the method is transportable and storable as a kit of parts comprising tubes and couplings.

Claims

1.    A tube junction comprising two tubes, one tube having an upset end with a portion of reduced cross-section which portion terminates in an inwardly turned end edge which defines a partially closed end aperture;  the upset end being fixed to the sidewall of the other tube.

2.    A tube junction as claimed in Claim 1 in the form of a tube coupling comprising two stub tubes each being capable of engaging a structural tube for building a structure, one stub tube having a tube-engaging free end and an opposite, upset end with a portion of reduced cross-section which portion terminates in an inwardly turned end edge which defines a partially closed end aperture; the upset end being fixed to the sidewall of the other stub tube.

3.    A tube junction as claimed in Claim  1 or 2 wherein the cross-sectional area of the partially closed end aperture is 30 - 70 percent of the tube cross-sectional area.

4.    A tube junction as claimed in Claim 3 wherein the cross-sectional area of the partially closed end aperture is 40 - 50 percent of the tube cross-sectional area.

5.    A tube junction as claimed in any one of Claims 1 to 4 wherein the tube is cylindrical and the portion of reduced cross-sectional area is of domed appearance.

6.    A tube junction as claimed in Claim 5 wherein the inwardly turned end edge is normal to the adjacent region of the domed wall of the tube.

7.    A tube junction as claimed in any one of Claims 1 to 4 wherein the tube is cylindrical and the portion of reduced cross-sectional area has a conical appearance.

8. A tube junction as claimed in any one of Claims 1 to 4 wherein the tube with the upset end is of square cross-section, the four corners at the upset end are rounded and the endmost part of each of the four walls is inclined inwards defining a square aperture of less cross-sectional area than the full cross-sectional area of the tube.

9. A tube junction as claimed in any one of the preceding claims wherein the upset end of one tube is connected to the sidewall of the other tube by two mutually opposite brazes or fillet welds laid between the contiguous zones of the tubes, the brazes or welds being disposed in positions which maximise the stiffness of the junction or coupling with respect to the direction of the load expected in the structure of which the junction or coupling ultimately forms a part.

10. A tube junction as claimed in Claim 9 wherein the length of the brazes or welds together is from 25 - 100 percent of the perimeter of the upset end of the tube.

11. A tube coupling as claimed in claim 2 or any one of claims 2 to 9 when appendant to claim 2 wherein the tube-engaging free end is modified to afford a coaxially overlapping union with a structural tube.

12. A tube coupling as claimed in Claim 11 wherein the tube-engaging free end is necked such that the leading section of the tube is a sliding fit in the overlapping region of the structural tube and the following section is a push fit in the overlapping region.

13. A tube junction as claimed in any one of the preceding claims wherein the tubes are made of steel which is coated for electrolytic protection on both the inside and outside surfaces and the brazes or welds are also protected by the application of a metal which gives electrolytic protection.

14. A structure containing one or more tube couplings or junctions as claimed in any one of claims 1 to 13.

15. A method of joining two tubes to make a tube junction as claimed in Claim 1 comprising reducing the cross-section of one end of one of the tubes, thereby directing the end edge of the tube inwardly in order to increase its strength, butting the end with the reduced cross-section to the side wall of the other tube and fixing the end to the side wall.

16. A method as claimed in Claim 15 wherein the reduction in cross-section of the end of the tube is performed by partially closing the end of a circular tube to give the end a domed appearance.

17. A method as claimed in Claim 15 or 16 wherein a pair of fillet welds or brazes are laid between the portion of reduced cross-section of one tube and the butted side wall of the other tube, in mutually opposite positions around the perimeter of the partially closed end of the tube, each weld or braze extending so far around the perimeter as will adequately stabilise the joint for the intended purpose.

18. A method as claimed in Claim 17 comprising positioning the tube whose curved wall is to receive the partially closed end of the other tube vertically in a jig which is capable of rotating about the longitudinal axis of the tube, positioning the other tube in the jig so as to butt the two tubes at the desired angle, applying a short arcuate weld or braze to one side of the butt joint, rotating the jig through $180^{\circ}$ and applying a corresponding short arcuate weld to the opposite side of the butt joint.

0074224

1/4

FIG.2

FIG.4

FIG.1

FIG.3

A

2/4

FIG. 5

FIG. 8

FIG. 6

202

204

2

2

4/4

FIG.7

0074224

**European Patent Office**

**EUROPEAN SEARCH REPORT**

Application number

EP 82304519.0

## DOCUMENTS CONSIDERED TO BE RELEVANT

| Category | Citation of document with indication, where appropriate, of relevant passages | Relevant to claim |
|---|---|---|
| A | US - A - 2 299 143 (HELLWIG) <br> * Fig. 3 * <br> -- | 1 |
| A | FR - A - 1 444 029 (M. BERLIET) <br> * Fig. 1 * <br> -- | 1 |
| A | DE - B - 1 005 330 (STEINMÜLLER) <br> * Fig. * <br> -- | 1 |
| A | DE - C - 616 115 (HENSELER) <br> * Fig. 2-4; lines 49,50 * <br> -- | 1-3,6, 15,16 |
| A | FR - A2 - 2 442 332 (FABRICATIONS METALLIQUES DE CIZELY) <br> * Fig. 2 * <br> -- | 1 |
| A | US - A - 3 881 572 (ZENHÄUSERN) <br> * Fig. 4 * <br> -- | 1 |
| A | US - A - 3 447 549 (CUNNINGHAM) <br> * Fig. 2; column 3, lines 38-55 * <br> ---- | 11,12 |

**CLASSIFICATION OF THE APPLICATION (Int. Cl. ³)**

B 23 K 33/00
E 04 B 1/38
A 45 F 1/16

**TECHNICAL FIELDS SEARCHED (Int. Cl. ³)**

B 23 K 31/00
B 23 K 33/00
B 21 D 39/00
E 06 C 7/00
A 45 F 1/00
E 04 B 1/00
E 04 H 12/00
E 04 H 17/00

The present search report has been drawn up for all claims

| Place of search | Date of completion of the search | Examiner |
|---|---|---|
| VIENNA | 16-11-1982 | HANSI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82